(19) Europäisches Patentamt
European Patent Office
Office européen des brevets

(11) **EP 2 822 983 B1**

(12) **EUROPEAN PATENT SPECIFICATION**

(45) Date of publication and mention
of the grant of the patent:
**21.11.2018 Bulletin 2018/47**

(51) Int Cl.:
**C08G 18/10** *(2006.01)*       **C08G 18/22** *(2006.01)*
**C08G 18/24** *(2006.01)*       **C08G 18/38** *(2006.01)*
**C08G 18/40** *(2006.01)*       **C08G 18/62** *(2006.01)*
**C09D 175/04** *(2006.01)*

(21) Application number: **13709164.1**

(22) Date of filing: **04.03.2013**

(86) International application number:
**PCT/EP2013/054235**

(87) International publication number:
**WO 2013/131835 (12.09.2013 Gazette 2013/37)**

(54) **NON-AQUEOUS LIQUID COATING COMPOSITION**

WASSERFREIE FLÜSSIGBESCHICHTUNGSZUSAMMENSETZUNG

COMPOSITION DE REVÊTEMENT LIQUIDE NON AQUEUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.03.2012 EP 12158432
08.03.2012 US 201261608251 P**

(43) Date of publication of application:
**14.01.2015 Bulletin 2015/03**

(73) Proprietor: **Akzo Nobel Coatings International B.V.
6824 BM Arnhem (NL)**

(72) Inventors:
• **SCHERER, Taco**
**NL-2023 EN Haarlem (NL)**

• **VAN BEELEN, Nicolaas Jacob**
**NL-2221 XM Katwijk aan Zee (NL)**
• **VAN DER PUTTEN, Antonius Josephus**
**NL-2211 VZ Noordwijkerhout (NL)**
• **VAN ADRICHEM, Arnoldus Adrianus Jozef Maria**
**NL-2171 PS Sassenheim (NL)**
• **BRUIN, David Elias**
**NL-2565 WH Den Haag (NL)**
• **GAGLIARDO, Marcella**
**NL-1902 HD Castricum (NL)**

(74) Representative: **Akzo Nobel IP Department
Velperweg 76
6824 BM Arnhem (NL)**

(56) References cited:
**WO-A1-2007/020269       WO-A1-2010/046333
US-A- 4 788 083**

**Description**

The invention relates to a non-aqueous liquid coating composition comprising a polyol, a polyisocyanate crosslinker, a thiol-functional compound, a metal-based curing catalyst for catalyzing the addition reaction of isocyanate groups and hydroxyl groups, and a base.

A coating composition of the above-mentioned type is known from international patent application WO 2010/112441. This document describes a composition wherein a photolatent base is used. The compositions described exhibit an excellent balance of cure rate and pot life. However, in order to achieve a fast curing rate activation by ultraviolet light is required. The need to have available and use specific ultraviolet light-emitting equipment may be perceived as a disadvantage in automobile body repair shops.

WO 2010/046333 describes a non-aqueous coating composition comprising a polyisocyanate, a polyol having an average functionality of more than 3 hydroxyl groups per molecule, a metal based curing catalyst, and a mercapto carboxylioc acid. In the examples described therein, the molar amount of base from the hindered amine light stabilizer exceeds the molar amount of thiol groups.

United States patent US 4788083 teaches the treatment of the applied coating with amine vapours in amine treatment chambers. Such a treatment is not a feasible option in automobile body repair shops or for very large objects, such as buses, trucks, or airplanes.

Therefore, a need exists for a coating composition which provides coating films having a good balance of properties, such as good hardness, excellent film appearance, durability, and resistance to environmental conditions, such as sunlight, moisture, acid rain and other contaminants. The coating composition should be suitable to be formulated with a low content of volatile organic content in order to comply with current and future regulations relating to the emission of such compounds. The applied coatings should be curable at ambient or low bake temperature, without the need to use specific ultraviolet light-emitting equipment. Above all, the coating composition should exhibit a sufficient pot life after mixing all components.

The invention now provides a non-aqueous liquid coating composition comprising

a) a polyol,
b) a polyisocyanate crosslinker
c) a metal-based curing catalyst for catalyzing the addition reaction of isocyanate groups and hydroxyl groups, and
d) one or more thiol-functional compounds,
e) a base having a pKa value of at least 7, and which base does not react with isocyanate groups in a way wherein the basicity is reduced,
f) one or more acid group-containing compounds,

wherein the one or more thiol-functional compounds are present in an amount to provide a molar ratio of thiol groups over the metal atoms of the metal-based curing catalyst of 10 or higher, and wherein the base is present in a molar amount lower than the molar amount of thiol groups, and wherein the molar ratio of acid groups and base groups is 1:1 or higher

It has been found that the coating composition provides coating films having a good balance of properties, such as good hardness, excellent film appearance, durability, and resistance to environmental conditions, such as sunlight, moisture, acid rain and other contaminants. The coating composition is highly suitable to be formulated with a low content of volatile organic content in order to comply with current and future regulations relating to the emission of such compounds. The applied coatings are curable at ambient or low bake temperature, without the need to use specific ultraviolet light-emitting equipment. It is particularly surprising that even through the use of a non-latent base having a pKa value of 7 or higher, it is possible to formulate coating compositions having an acceptable pot life, while international patent application WO 2010/113441 teaches the use of a latent base, which requires activation by ultraviolet light.

Examples of suitable polyols include compounds comprising at least two hydroxyl groups. These may be monomers, oligomers, polymers, and mixtures thereof. Examples of hydroxy-functional oligomers and monomers are castor oil, trimethylol propane, and diols. Branched diols such as described in International patent application WO 98/053013, e.g. 2-butyl-ethyl-1,3-propanediol, may be mentioned in particular.

Examples of suitable polymers include polyester polyols, polyacrylate polyols, polycarbonate polyols, polyurethane polyols, melamine polyols, and mixtures and hybrids thereof. Such polymers are generally known to the skilled person and are commercially available. Suitable polyester polyols, polyacrylate polyols, and mixtures thereof are for example described in International patent application WO 96/20968 and in European patent application EP 0688840 A. Examples of suitable polyurethane polyols are described in International patent application WO 96/040813.

Further examples include hydroxy-functional epoxy resins, alkyds, and dendrimeric polyols such as described in International patent application WO 93/17060. The coating composition can also comprise latent hydroxy-functional compounds such as compounds comprising bicyclic orthoester, spiro-orthoester, spiro-ortho silicate groups, or bicyclic amide acetals. These compounds and their use are described in International patent applications WO 97/31073, WO 2004/031256, and WO 2005/035613, respectively.

Suitable isocyanate-functional crosslinkers for use in the coating composition are isocyanate-functional compounds comprising at least two isocyanate groups. Preferably, the isocyanate-functional crosslinker is a polyisocyanate, such as an aliphatic, cycloaliphatic or aromatic di-, tri- or tetra-isocyanate. Examples of diisocyanates include 1,2-propylene diisocyanate, trimethylene diisocyanate, tetramethylene diisocyanate, 2,3-butylene diisocyanate, hexamethylene diisocyanate, octamethylene diisocyanate, 2,2,4-trimethyl hexamethylene diisocyanate, dodecamethylene diisocyanate, $\omega,\omega'$-dipropylether diisocyanate, 1,3-cyclopentane diisocyanate, 1,2-cyclohexane diisocyanate, 1,4-cyclohexane diisocyanate, isophorone diisocyanate, 4-methyl-1,3-diisocyanatocyclohexane, trans-vinylidene diisocyanate, dicyclohexyl methane-4,4'-diisocyanate (Desmodur® W), toluene diisocyanate, 1,3-bis(isocyanatomethyl) benzene, xylylene diisocyanate, $\alpha,\alpha,\alpha',\alpha'$-tetramethyl xylylene diisocyanate (TMXDI®), 1,5-dimethyl-2,4-bis(2-isocyanatoethyl) benzene, 1,3,5-triethyl-2,4-bis(isocyanatomethyl) benzene, 4,4'-diisocyanato-diphenyl, 3,3'-dichloro-4,4'-diisocyanato-diphenyl, 3,3'-diphenyl-4,4'-diisocyanato-diphenyl, 3,3'-dimethoxy-4,4'-diisocyanato-diphenyl, 4,4'-diisocyanato-diphenyl methane, 3,3'-dimethyl-4,4'-diisocyanato-diphenylmethane, and diisocyanatonaphthalene. Examples of triisocyanates include 1,3,5-triisocyanatobenzene, 2,4,6-triisocyanatotoluene, 1,8-diisocyanato-4-(isocyanatomethyl) octane, and lysine triisocyanate. Adducts and oligomers of polyisocyanates, for instance biurets, isocyanurates, allophanates, imino-oxadiazinediones, uretdiones, urethanes, and mixtures thereof are also included. Examples of such oligomers and adducts are the adduct of 2 molecules of a diisocyanate, for example hexamethylene diisocyanate or isophorone diisocyanate, to a diol such as ethylene glycol, the adduct of 3 molecules of hexamethylene diisocyanate to 1 molecule of water (available under the trademark Desmodur N of Bayer), the adduct of 1 molecule of trimethylol propane to 3 molecules of toluene diisocyanate (available under the trademark Desmodur L of Bayer), the adduct of 1 molecule of trimethylol propane to 3 molecules of isophorone diisocyanate, the adduct of 1 molecule of pentaerythritol to 4 molecules of toluene diisocyanate, the adduct of 3 moles of m-$\alpha,\alpha,\alpha',\alpha'$-tetramethyl xylene diisocyanate to 1 mole of trimethylol propane, the isocyanurate trimer of 1,6-diisocyanatohexane, the isocyanurate trimer of isophorone diisocyanate, the uretdione dimer of 1,6-diisocyanatohexane, the biuret of 1,6-diisocyanatohexane, the allophanate of 1,6-diisocyanatohexane, and mixtures thereof. Furthermore, (co)polymers of isocyanate-functional monomers such as $\alpha,\alpha'$-dimethyl-m-isopropenyl benzyl isocyanate are suitable for use. If desired, it is also possible to use hydrophobically or hydrophilically modified polyisocyanates to impart specific properties to the coating.

In the coating composition according to the invention the equivalent ratio of isocyanate-functional groups to hydroxyl groups suitably is between 0.5 and 4.0, preferably between 0.7 and 3.0, and more preferably between 0.8 and 2.5. Generally, the weight ratio of hydroxy-functional binders to isocyanate-functional crosslinker in the coating composition, based on non-volatile content, is between 85 : 15 and 15 : 85, preferably between 70 : 30 and 30 : 70.

As mentioned above, the coating composition of the invention also comprises a metal-based catalyst for the addition reaction of isocyanate groups and hydroxyl groups. Such catalysts are known to the skilled person. The catalyst is generally used in an amount of 0.001 to 10 weight-%, preferably 0.002 to 5 weight-%, more preferably in an amount of 0.01 to 1 weight-%, calculated on the non-volatile matter of the coating composition. Suitable metals in the metal-based catalyst include zinc, cobalt, manganese, zirconium, bismuth, and tin. It is preferred that the coating composition comprises a tin based catalyst. Well-known examples of tin based catalysts are dimethyl tin dilaurate, dimethyl tin diversatate, dimethyl tin dioleate, dibutyl tin dilaurate, dioctyl tin dilaurate, and tin octoate. Also suitable are dialkyl tin mercaptides, dialkyl tin maleates, and dialkyl tin acetates. It is also possible to use mixtures and combinations of metal-based catalysts.

Suitable thiol-functional compounds include dodecyl mercaptan, mercapto ethanol, 1,3-propanedithiol, 1,6-hexanedithiol, methylthioglycolate, 2-mercaptoacetic acid, mercaptosuccinic acid, and cysteine. Also suitable are esters of a thiol-functional carboxylic acid with a polyol, such as esters of 2-mercaptoacetic acid, 3-mercaptopropionic acid, 2-mercaptopropionic acid, 11-mercaptoundecanoic acid, and mercaptosuccinic acid. Examples of such esters include pentaerythritol tetrakis (3-mercaptopropionate), pentaerythritol tetrakis (2-mercaptoacetate), trimethylol propane tris (3-mercaptopropionate), trimethylol propane tris (2-mercaptopropionate), and trimethylol propane tris (2-mercaptoacetate). A further example of such a compound consists of a hyperbranched polyol core based on a starter polyol, e.g. trimethylol propane and dimethylol propionic acid, which is subsequently esterified with 3-mercaptopropionic acid and isononanoic acid. These compounds are described in European patent application EP-A-0 448 224 and International patent application WO 93/17060.

Other suitable thiol-functional compounds are described in International patent application WO 2010/112441.

As mentioned above, the one or more thiol-functional compounds are present in an amount to provide a molar ratio of thiol groups over the metal atoms of the metal-based curing catalyst of 10 or higher.

The coating composition of the invention further comprises base having a pKa value of at least 7, and which base does not react with isocyanate groups in a way wherein the basicity is reduced. Suitably, the base has a pKa value in the range of 7 to 9, preferably 7 to 8.5. The pKa value is the negative log of the dissociation constant $K_A$ of the protonated base:

$$K_A = [HB^+]]/[B] [H^+]$$

The dissociation constant is generally determined in an aqueous environment, at a temperature of 20°C.

The base is a non-latent base which does not require an activation step by irradiation with ultraviolet light or by heat. As mentioned above, the base does not react with isocyanate groups in a way wherein the basicity is reduced. Generally, it is determined at ambient temperature, such as 20°C, whether such a reaction takes place. Primary or secondary amines, which rapidly react with isocyanate groups to form urea groups are not suitable as base in the present invention.

The base preferably is not volatile under the curing conditions of the coating composition. Suitable bases generally have a boiling point higher than 80°C, preferably higher than 120°C, or even higher than 150°C. Examples of suitable bases are tertiary amines and amine oxides.

Examples of suitable tertiary amines are 1,4-diazabicyclo[2.2.2]octane, Bis(1,2,2,6,6-pentamethyl-4-piperidinyl)-sebacate, 1-(Methyl)-8-(1,2,2,6,6-pentamethyl-4-piperidinyl)-sebacate, and mixtures thereof. Other examples of suitable amines are tribenzylamine, tributylamine, piperidinol, triethylamine, triethylene diamine, triethanolamine, dimethylphenetylamine, (1-benzyl-propyl)-dimethylamine, N-(butylglycidylether)-N,N-dibutylamine, N-(phenylglycidylether)-N,N-dibutylamine, 2,4,6-tri-(dimethylaminemethyl)phenol, N-methylpiperdine, triisopropylamine, triisopropanolamine, N,N-dimethylethanolamine, dimethylisopropy-lamine, N,N-diethylethanolamine, 1-dimethylamino-2-propanol, 3-dimethylamino-1-propanol, 2-dimethylamino-2-methyl-1-propanol, N-methyl diethanolamine, N-ethyldiethanolamine, N-butyldiethanolamine, N,N-dimethylpiperazine, and N-ethyl morpholine. The reaction products of primary and secondary amines with epoxide functional compounds are also suitable. Examples of this type of amine are the reaction products of dibutylamine and phenyl glycidyl ether or butyl glycidyl ether. As mentioned above, the base is present in the coating composition in a molar amount lower than the molar amount of thiol groups.

In a preferred embodiment, the molar amount of base is equal to or higher than the molar amount of metal atoms of the metal-based curing catalyst, for example at least 1:1, or at least 1.2:1.

The coating composition comprises an acid group-containing compound as well. Such acid groups may be present in polymeric form. Often, the polyols used comprise a certain amount of carboxylic acid groups. Typical acrylic polyols have acid numbers in the range of 1 to 15 mg KOH/g. Polyester polyols may likewise comprise carboxylic acid groups. It is also possible to include additional carboxylic or other acid group-containing compounds. The acid group-containing compounds in the coating composition influence the balance of pot life and cure rate of the coating composition. Generally, the addition of acid group-containing compounds has been found to increase the pot life and to slightly decrease the curing rate. Hence, by including an acid group-containing compound it is possible to fine tune the balance of pot life and cure rate.

Examples of suitable acid group-containing compounds are carboxylic acids, such as benzoic acid and hexanoic acid, sulphonic acids, such as dodecyl sulphonic acid and toluene sulphonic acid, and phosphoric acid esters, such as dibutyl phosphate. It is also possible to use mixtures and combinations of different acid group-containing compounds. The acid group-containing compound is present in a molar amount equal to or above the base e) mentioned above. The molar ratio of acid groups to base groups is at least 1:1. Generally, the ratio does not exceed 15:1.

The coating composition may be used and applied without a volatile diluent, in particular when low molecular weight binders, optionally in combination with one or more reactive diluents, are used. Alternatively, the coating composition may optionally comprise a volatile organic solvent. Preferably, the coating composition comprises less than 500 g/l of volatile organic solvent based on the total composition, more preferably less than 480 g/l, and most preferably 420 g/l or less. The non-volatile content of the composition, usually referred to as the solid content, preferably is higher than 50 weight-% based on the total composition, more preferably higher than 54 weight-%, and most preferably higher than 60 weight-%.

Examples of suitable volatile organic diluents are hydrocarbons, such as toluene, xylene, Solvesso 100, ketones, terpenes, such as dipentene or pine oil, halogenated hydrocarbons, such as dichloromethane, ethers, such as ethylene glycol dimethyl ether, esters, such as ethyl acetate, ethyl propionate, n-butyl acetate or ether esters, such as methoxypropyl acetate or ethoxyethyl propionate. Also mixtures of these compounds can be used.

If so desired, it is possible to include one or more so-called "exempt solvents" in the coating composition. An exempt solvent is a volatile organic compound that does not participate in an atmospheric photochemical reaction to form smog. It can be an organic solvent, but it takes so long to react with nitrogen oxides in the presence of sunlight that the Environmental Protection Agency of the United States of America considers its reactivity to be negligible. Examples of exempt solvents that are approved for use in paints and coatings include acetone, methyl acetate, parachlorobenzotrifluoride (commercially available under the name Oxsol 100), and volatile methyl siloxanes. Also tertiary butyl acetate is being considered as an exempt solvent.

In addition to the components described above, other compounds can be present in the coating composition according to the present invention. Such compounds may be binders and/or reactive diluents, optionally comprising reactive groups which may be crosslinked with the aforesaid hydroxy-functional compounds and/or isocyanate-functional crosslinkers. Examples of such other compounds are ketone resins, and latent amino-functional compounds such as oxazolidines, ketimines, aldimines, and diimines. These and other compounds are known to the skilled person and are mentioned, int. al., in US 5214086.

The coating composition may further comprise other ingredients, additives or auxiliaries commonly used in coating compositions, such as pigments, dyes, surfactants, pigment dispersion aids, levelling agents, wetting agents, anti-cratering agents, antifoaming agents, antisagging agents, heat stabilizers, light stabilizers, UV absorbers, antioxidants, and fillers.

The coating composition is very suitable for use as a clear coat. A clear coat is essentially free of pigments and is transparent for visible light. However, the clear coat composition may comprise matting agents, for example silica based matting agents, to control the gloss level of the coating.

The coating composition can suitably be prepared by a process comprising mixing a polyol, one or more thiol-functional compounds, a metal-based curing catalyst for catalyzing the addition reaction of isocyanate groups and hydroxyl groups and a base having a pKa value of at least 7, and which base does not react with isocyanate groups in a way wherein the basicity is reduced, to form a binder module, and mixing the binder module with a polyisocyanate, wherein the one or more thiol-functional compounds are present in an amount to provide a molar ratio of thiol groups over the metal atoms of the metal-based curing catalyst of 10 or higher, and wherein the base is present in a molar amount lower than the molar amount of thiol groups.

As is usual with coating compositions comprising a hydroxy-functional binder and an isocyanate-functional crosslinker, the composition according to the invention has a limited pot life. Therefore, the composition is suitably provided as a multicomponent composition, for example as a two-component composition or as a three-component composition. Therefore, the invention also relates to a kit of parts for preparing a coating composition, comprising

i) a binder module comprising a polyol, one or more thiol-functional compounds, a metal-based curing catalyst for catalyzing the addition reaction of isocyanate groups and hydroxyl groups, and a base having a pKa value of at least 7, and which base does not react with isocyanate groups in a way wherein the basicity is reduced, and one or more acid group-containing compounds, and
ii) a crosslinker module comprising a polyisocyanate crosslinker,

wherein the one or more thiol-functional compounds are present in an amount to provide a molar ratio of thiol groups over the metal atoms of the metal-based curing catalyst of 10 or higher, and wherein the base is present in a molar amount lower than the molar amount of thiol groups, and wherein the molar ratio of acid groups and base groups is 1:1 or higher.

Alternatively, the kit of parts may comprise three components, comprising

i) a binder module comprising a polyol,
ii) a crosslinker module comprising a polyisocyanate crosslinker, and
iii) a diluent module comprising a volatile organic diluent,

wherein one or more thiol-functional compounds, a metal-based curing catalyst for catalyzing the addition reaction of isocyanate groups and hydroxyl groups, and a base having a pKa value of at least 7, and which base does not react with isocyanate groups in a way wherein the basicity is reduced, are distributed over modules i), ii) or iii), and wherein at least one of the modules comprises an acid group-containing compound, and wherein the one or more thiol-functional compounds are present in an amount to provide a molar ratio of thiol groups over the metal atoms of the metal-based curing catalyst of 10 or higher, and wherein the base is present in a molar amount lower than the molar amount of thiol groups, and wherein the molar ratio of acid groups and base groups is 1:1 or higher.

The components of the coating composition may also be distributed in different ways over the modules as described above, as long as the modules exhibit the required storage stability. Components of the coating composition which react with each other upon storage, are preferably not combined in one module.

If desired, the components of the coating composition may be distributed over even more modules, for example 4 or 5 modules.

The coating composition of the invention can be applied to any substrate. The substrate may be, for example, metal, e.g., iron, steel, and aluminium, plastic, wood, glass, synthetic material, paper, leather, or another coating layer. The other coating layer can be comprised of the coating composition of the current invention or it can be a different coating composition. The coating compositions of the current invention show particular utility as clear coats, base coats, pigmented top coats, primers, and fillers. When the coating composition of the invention is a clear coat, it is preferably applied over a colour- and/or effect-imparting base coat. In that case, the clear coat forms the top layer of a multi-layer lacquer coating such as typically applied on the exterior of automobiles. The base coat may be a water borne base coat or a solvent borne base coat.

The coating compositions are suitable for coating objects such as bridges, pipelines, industrial plants or buildings, oil and gas installations, or ships. The compositions are particularly suitable for finishing and refinishing automobiles and large transportation vehicles, such as trains, trucks, buses, and airplanes.

Therefore, the invention also relates to a method of providing a coating for at least a part of the exterior surface of a transportation vehicle, wherein the method comprises the steps of applying a liquid coating composition according to the invention to at least a part of the exterior surface of a transportation vehicle, and curing the applied coating composition in a temperature range of 5 to 80°C. The curing step can advantageously be carried out at medium temperatures, for example up to 50 or 60 °C.

The coating composition of the invention can likewise be used as adhesive. Therefore, the expression "coating composition" as used herein also encompasses adhesive compositions.

EXAMPLES

Raw materials used

The polyacrylate polyol solution had a non-volatile content of 68.3% by weight, solvent butyl acetate. The polymer was prepared from hydroxy ethyl methacrylate, butyl methacrylate, methyl methacrylate, and styrene. The hydroxyl number was 140 mg KOH/g (on non volatile content), the acid number was 4.5 mg KOH/g (on non-volatile content), Mw 3,520, Mn 1,720 (GPC, polystyrene standard).

The polyester polyol was as described in Example E2 of WO 2007/020269 A. Tinuvin 292 is a mixture of two active tertiary amine ingredients: bis(1,2,3,6,6-pentamethyl-4-piperidinyl)sebacate and methyl(1,2,2,6,6-pentamethyl-4-piperidinyl)sebacate, ex BASF.

Tinuvin 1130 is a benzotriazole-based UV absorber, ex BASF
Tolonate HDT90 is a hexamethylene diisocyanate based trimer, ex Perstorp Vestanat T1890 is an isophorone diisocyanate based trimer ex Evonik

Example 1

Preparation of a binder module

A binder module was prepared by mixing the following components:

| Component | pbw |
| --- | --- |
| Polyacrylate polyol solution | 14.43 |
| Polyester polyol | 17.06 |
| Butyl acetate | 10.10 |
| Solution of commercial wetting agents | 0.81 |
| Tinuvin 292 | 0.14 |
| Tinuvin 1130 | 0.34 |

Preparation of a crosslinker module

A crosslinker module was prepared by mixing the following components:

| Component | pbw |
| --- | --- |
| Tolonate HDT90 | 20.04 |
| Methyl iso amyl ketone | 8.23 |
| Vestanat T1890E | 16.10 |

Preparation of a diluent module:

A diluent module was prepared by mixing the following components

| Component | pbw |
|---|---|
| Butyl acetate | 6.54 |
| Xylene | 4.86 |
| Pentaerythritol tetrakis mercapto propionate | 1.11 |
| Dioctyl tin dilaurate | 0.32 |

A clear coat composition was prepared by mixing the modules. The molar ratio of tin atoms : SH groups: acid groups: base groups in Example 1 was 0.43:9.09:1.70:0.55. The base groups were provided by Tinuvin 292, and the acid groups were present in the form of carboxylic acid groups from the polyacrylate polyol. The initial viscosity was measured using a DIN 4 cup. The time to form a gel was determined at room temperature. The content of volatile organic solvents was below 420 g/l.
The clear coat was applied by spraying to a panel of coil coated steel and allowed to dry at ambient temperature (23°C). The dry film layer thickness was between 40 and 80 μm.

Example 2 (Comparative)

The same procedure as described above for Example 1 was followed. However, the amount of dioctyl tin dilaurate was three times the molar amount of Example 1.

Example 3

The same procedure as described above for Example 1 was followed. However, the amount of base was increased.

Comparative Example A

The same procedure as described above for Example 1 was followed. However, no thiol-functional compound was used.

Comparative Example B

The same procedure as described above for Example 1 was followed. However, no base was used.

Comparative Example C

The same procedure as described above for Example 1 was followed. However, the amount of base was supplemented by triethylamine (1.28 pbw).
Table 1 summarizes the results. The first 4 lines indicate the molar ratios of the metal atoms of the Sn curing catalyst, the thiol groups of the thiol-functional compound, acid, and base.
The drying stage of applied coatings layer was determined manually, with 10 drying stages being discerned:

1. The still-wet coating is easily rubbed off with a thumb.
2. By touching the coating with a thumb, threads of paints may be drawn.
3. The coating is cohesive, but is easily damaged down to the substrate by gentle rubbing with a thumb.
4. Gentle rubbing with a thumb leaves a clear mark.
5. Gentle rubbing with a thumb hardly leaves a mark. A tuft of wadding, dropped on the paint, can be blown off. The coating is dust-dry.
6. Gentle rubbing with a thumb leaves no mark. On gentle rubbing or pushing with the palm of a hand, a sticky effect is felt.
7. On gentle rubbing or pushing with the palm of a hand, no stickiness is observed. The coating is tack-free.
8. Firm pushing with a thumb leaves a permanent mark.

9. The mark from firm pushing with a thumb disappears after 1-2 minutes. The coating is touch-dry.

10. The coating can hardly, or not at all, be damaged by scratching with a nail. The coating is hardened-through

The distinctness of image (DOI) of clear coat films was determined with a Byk-Gardner Wavescan DOI apparatus at least one day after application of the clearcoat. Higher DOI values indicate a better film appearance.

Table 1

| Example | 1 | 2 | 3 | A | B | C |
|---|---|---|---|---|---|---|
| Sn | 0.43 | 1.29 | 0.43 | 0.43 | 0.43 | 0.43 |
| SH | 9.09 | 9.09 | 9.09 | 0.00 | 9.09 | 9.09 |
| Acid | 1.70 | 1.70 | 1.69 | 1.70 | 1.70 | 1.70 |
| Base | 0.55 | 0.55 | 1.10 | 0.55 | 0.00 | 13.20 |
|  |  |  |  |  |  |  |
|  |  |  |  |  |  |  |
| Start visc. (Din cup 4, sec) | 14.4 | 14.6 | 14.3 | 14.6 | 14.6 | 16.6 |
| Time to gel (min) | >120 | > 60 | >60 | < 20 | >180 | < 20 |
|  |  |  |  |  |  |  |
| Drying phase after 15 min | 1 | 1 | 3 | 2 | 1 | 3 |
| 30 | 5 | 6 | 5 | 5 | 1 | 9 |
| 45 | 6 | 7 | 8 | 7 | 1 | 9 |
| 60 | 7 | 9 | 9 | 9 | 2 | 9 |
|  |  |  |  |  |  |  |
| DOI | 92 | 92 | 95 | 93 | 92 | 94 |
| Persoz hardness after 1 day | 162 | 241 | 98 | 131 | 229 | 104 |

From the Examples and the results in Table 1 it can be inferred that a coating compositions according to the invention provides coating films having a good balance of properties, such as good hardness, excellent film appearance. The coating compositions are suitable to be formulated with a low content of volatile organic content in order to comply with current and future regulations relating to the emission of such compounds. The applied coatings are curable at ambient or low bake temperature, without the need to use specific ultraviolet light-emitting equipment. The coating composition exhibit a sufficient pot life after mixing all components. Example 1 according to the invention has overall good properties. Example 2 has an increased level of tin catalyst and still exhibits a sufficient pot life. The curing rate is increased. Example 3 demonstrates the effect of an increased amount of base, which slightly increases the curing rate. It can be concluded that comparative Example B without a base has a very long pot life, but has insufficient cure rate. Comparative example A without a thiol forms a gel in less than 20 minutes and therefore has an insufficient pot life. Likewise, comparative Example C, wherein the base is present in a molar amount higher than the molar amount of thiol groups, forms a gel in less than 20 minutes and therefore has an insufficient pot life.

**Claims**

1.  A non-aqueous liquid coating composition comprising

> a) a polyol,
> b) a polyisocyanate crosslinker
> c) one or more thiol-functional compounds,
> d) a metal-based curing catalyst for catalyzing the addition reaction of isocyanate groups and hydroxyl groups,
> e) a base having a pKa value of at least 7, and which base does not react with isocyanate groups in a way wherein the basicity is reduced, and
> f) one or more acid group-containing compounds,

wherein the one or more thiol-functional compounds are present in an amount to provide a molar ratio of thiol groups over the metal atoms of the metal-based curing catalyst of 10 or higher, and wherein the base is present in a molar amount lower than the molar amount of thiol groups, and wherein the molar ratio of acid groups and base groups is 1:1 or higher.

2. The coating composition according claim 1, wherein the base is present in a molar amount equal to or higher than the molar amount of metal atoms of the metal-based curing catalyst.

3. The coating composition according to any one of the preceding claims, wherein the coating composition is a clear coat composition.

4. A process for preparing a coating composition according to any one of the preceding claims, comprising mixing a polyol, one or more thiol-functional compounds, a metal-based curing catalyst for catalyzing the addition reaction of isocyanate groups and hydroxyl groups, and a base having a pKa value of at least 7, and which base does not react with isocyanate groups in a way wherein the basicity is reduced, and one or more acid group-containing compounds to form a binder module, and mixing the binder module with a polyisocyanate, wherein the one or more thiol-functional compounds are present in an amount to provide a molar ratio of thiol groups over the metal atoms of the metal-based curing catalyst of 10 or higher, and wherein the base is present in a molar amount lower than the molar amount of thiol groups, and wherein the molar ratio of acid groups and base groups is 1:1 or higher.

5. A kit of parts for preparing a coating composition according to any one of the preceding claims 1 to 3, comprising

   i) a binder module comprising a polyol, one or more thiol-functional compounds, a metal-based curing catalyst for catalyzing the addition reaction of isocyanate groups and hydroxyl groups, a base having a pKa value of at least 7, and which base does not react with isocyanate groups in a way wherein the basicity is reduced, and one or more acid group containing compounds, and
   ii) a crosslinker module comprising a polyisocyanate crosslinker, wherein the one or more thiol-functional compounds are present in an amount to provide a molar ratio of thiol groups over the metal atoms of the metal-based curing catalyst of 10 or higher, and wherein the base is present in a molar amount lower than the molar amount of thiol groups, and wherein the molar ratio of acid groups and base groups is 1:1 or higher.

6. A kit of parts for preparing a coating composition according to any one of the preceding claims 1 to 3, comprising

   i) a binder module comprising a polyol and a base having a pKa value of at least 7, and which base does not react with isocyanate groups in a way wherein the basicity is reduced,
   ii) a crosslinker module comprising a polyisocyanate crosslinker, and
   iii) a diluent module comprising a volatile organic diluent, a metal-based curing catalyst for catalyzing the addition reaction of isocyanate groups and hydroxyl groups, and one or more thiol-functional compounds, wherein the one or more thiol-functional compounds are present in an amount to provide a molar ratio of thiol groups over the metal atoms of the metal-based curing catalyst of 10 or higher,

   and wherein the base is present in a molar amount lower than the molar amount of thiol groups, and wherein at least one of the modules comprises an acid group-containing compound, and wherein the molar ratio of acid groups and base groups is 1:1 or higher.

7. A method of providing a coating for at least a part of the exterior surface of a transportation vehicle, wherein the method comprises the steps of applying a liquid coating composition according to any one of the preceding claims 1 to 3 to at least a part of the exterior surface of a transportation vehicle, and curing the applied coating composition in a temperature range of 5 to 80°C.

8. The method according to claim 7, wherein the liquid coating composition is applied as a clear coat on top of a pigmented base coat.

**Patentansprüche**

1. Nicht wässrige Flüssigbeschichtungs-Zusammensetzung, umfassend

a) ein Polyol,

b) einen Polyicocyanat-Vernetzer

c) eine oder mehrere thiolfunktionelle Verbindungen,

d) einen metallbasierten Härtungskatalysator zum Katalysieren der Additionsreaktion von Isocyanatgruppen und Hydroxylgruppen,

e) eine Base mit einem pKa-Wert von wenigstens 7, die nicht derart mit Isocyanatgruppen reagiert, dass die Basizität reduziert wird, und

f) eine oder mehrere Säuregruppen enthaltende Verbindungen,

wobei die eine oder die mehreren thiolfunktionellen Verbindungen in einer Menge vorhanden sind, dass sie ein Molverhältnis von Thiolgruppen zu den Metallatomen des metallbasierten Härtungskatalysators von 10 oder höher liefern, und wobei die Base in einer Molmenge unter der Molmenge von Thiolgruppen vorhanden ist, und wobei das Molverhältnis der Säuregruppen und der Basengruppen 1:1 oder höher ist.

2. Beschichtungszusammensetzung nach Anspruch 1, wobei die Base in einer Molmenge von gleich oder höher als die Molmenge der Metallatome des metallbasierten Härtungskatalysators vorhanden ist.

3. Beschichtungszusammensetzung nach einem der vorhergehenden Ansprüche, wobei die Beschichtungszusammensetzung eine klare Beschichtungszusammensetzung ist.

4. Verfahren zur Herstellung einer Beschichtungszusammensetzung nach einem der vorhergehenden Ansprüche, umfassend das Mischen eines Polyols, einer oder mehrerer thiolfunktioneller Verbindungen, eines metallbasierten Härtungskatalysators zum Katalysieren der Additionsreaktion von Isocyanatgruppen und Hydroxylgruppen, und einer Base mit einem pKa-Wert von wenigstens 7, die nicht derart mit Isocyanatgruppen reagiert, dass die Basizität reduziert wird, und eine oder mehrere Säuregruppen enthaltende Verbindungen, um ein Bindemittelmodul zu bilden, und Mischen des Bindemittelmoduls mit einem Polyisocyanat, wobei die eine oder die mehreren thiolfunktionellen Verbindungen in einer Menge vorhanden sind, dass sie ein Molverhältnis von Thiolgruppen zu den Metallatomen des metallbasierten Katalysators von 10 oder höher liefern, und wobei die Base in einer Molmenge unter der Molmenge von Thiolgruppen vorhanden ist, und wobei das Molverhältnis der Säuregruppen und der Basengruppen 1:1 oder höher ist.

5. Kit von Teilen zur Herstellung einer Beschichtungszusammensetzung nach einem der vorhergehenden Ansprüche 1 bis 3, umfassend

i) ein Bindemittelmodul, umfassend ein Polyol, eine oder mehrere thiolfunktionelle Verbindungen, einen metallbasierten Härtungskatalysator zum Katalysieren der Additionsreaktion von Isocyanatgruppen und Hydroxylgruppen, eine Base mit einem pKa-Wert von wenigstens 7, die nicht derart mit Isocyanatgruppen reagiert, dass die Basizität reduziert wird, und eine oder mehrere Säuregruppen enthaltende Verbindungen, und

ii) ein Vernetzermodul, umfassend einen Polyisocyanat-Vernetzer, wobei die eine oder die mehreren thiolfunktionellen Verbindungen in einer Menge vorhanden sind, dass sie ein Molverhältnis von Thiolgruppen zu den Metallatomen des metallbasierten Härtungskatalysators von 10 oder höher liefern, und wobei die Base in einer Molmenge unter der Molmenge von Thiolgruppen vorhanden ist, und wobei das Molverhältnis der Säuregruppen und der Basengruppen 1:1 oder höher ist.

6. Kit von Teilen zur Herstellung einer Beschichtungszusammensetzung nach einem der vorhergehenden Ansprüche 1 bis 3, umfassend

i) ein Bindemittelmodul, umfassend ein Polyol und eine Base mit einem pKa-Wert von wenigstens 7, die nicht derart mit Isocyanatgruppen reagiert, dass die Basizität reduziert wird,

ii) ein Vernetzermodul, umfassend einen Polyisocyanat-Vernetzer, und

iii) ein Verdünnermodul, umfassend einen flüchtigen, organischen Verdünner, einen metallbasierten Härtungskatalysator zum Katalysieren der Additionsreaktion von Isocyanatgruppen und Hydroxylgruppen, und eine oder mehrere thiolfunktionelle Verbindungen, wobei die eine oder die mehreren thiolfunktionellen Verbindungen in einer Menge vorhanden sind, dass sie ein Molverhältnis von Thiolgruppen zu den Metallatomen des metallbasierten Härtungskatalysators von 10 oder höher liefern,

und wobei die Base in einer Molmenge unter der Molmenge von Thiolgruppen vorhanden ist, und wobei wenigstens eines der Module eine Säuregruppen enthaltende Verbindung umfasst, und wobei das Molverhältnis der Säuregruppen und der Basengruppen 1:1 oder höher ist.

**7.** Verfahren zum Bereitstellen einer Beschichtung für wenigstens einen Teil der Außenseite eines Transportfahrzeugs, wobei das Verfahren die Schritte des Auftragens einer Flüssigbeschichtungs-Zusammensetzung nach einem der vorhergehenden Ansprüche 1 bis 3 auf wenigstens einen Teil der Außenseite eines Transportfahrzeugs und das Härten der aufgetragenen Beschichtungszusammensetzung in einem Temperaturbereich von 5 bis 80°C umfasst.

**8.** Verfahren nach Anspruch 7, wobei die Flüssigbeschichtungs-Zusammensetzung als klare Beschichtung auf eine pigmentierte Grundschicht aufgetragen wird.

## Revendications

**1.** Composition de revêtement liquide non aqueux comprenant

a) un polyol,
b) un agent de réticulation de type polyisocyanate
c) un ou plusieurs composé(s) à fonction thiol,
d) un catalyseur de durcissement à base de métal pour catalyser la réaction d'addition de groupes isocyanate et de groupes hydroxyle,
e) une base ayant une valeur pKa d'au moins 7, et laquelle base ne réagit pas avec les groupes isocyanate de manière à ce que la basicité soit réduite, et
f) un ou plusieurs composé(s) contenant des groupes acides,

dans laquelle le ou les plusieurs composé(s) à fonction thiol est/sont présent(s) en une quantité permettant de fournir un rapport molaire de groupes thiol sur les atomes de métal du catalyseur de durcissement à base de métal supérieur ou égal à 10, et où la base est présente en une quantité molaire inférieure à la quantité molaire de groupes thiol, et où le rapport molaire entre les groupes acides et les groupes basiques est supérieur ou égal à 1 : 1.

**2.** Composition de revêtement selon la revendication 1, dans laquelle la base est présente en une quantité molaire supérieure ou égale à la quantité molaire d'atomes de métal du catalyseur de durcissement à base de métal.

**3.** Composition de revêtement selon l'une quelconque des revendications précédentes, dans laquelle la composition de revêtement est une composition de couche transparente.

**4.** Procédé de préparation d'une composition de revêtement selon l'une quelconque des revendications précédentes, comprenant le fait de mélanger un polyol, un ou plusieurs composé(s) à fonction thiol, un catalyseur de durcissement à base de métal pour catalyser la réaction d'addition de groupes isocyanate et de groupes hydroxyle, et une base ayant une valeur pKa d'au moins 7, et laquelle base ne réagit pas avec les groupes isocyanate de manière à ce que la basicité soit réduite, et un ou plusieurs composé(s) contenant des groupes acides pour former un module liant, et de mélanger le module liant avec un polyisocyanate, où le ou les plusieurs composé(s) à fonction thiol est/sont présent(s) en une quantité permettant de fournir un rapport molaire de groupes thiol sur les atomes de métal du catalyseur de durcissement à base de métal supérieur ou égal à 10, et où la base est présente en une quantité molaire inférieure à la quantité molaire de groupes thiol, et où le rapport molaire entre les groupes acides et les groupes basiques est supérieur ou égal à 1 : 1.

**5.** Kit d'éléments pour préparer une composition de revêtement selon l'une quelconque des revendications 1 à 3 précédentes, comprenant

i) un module liant comprenant un polyol, un ou plusieurs composé(s) à fonction thiol, un catalyseur de durcissement à base de métal pour catalyser la réaction d'addition de groupes isocyanate et de groupes hydroxyle, une base ayant une valeur pKa d'au moins 7, et laquelle base ne réagit pas avec les groupes isocyanate de manière à ce que la basicité soit réduite, et un ou plusieurs composé(s) contenant des groupes acides, et
ii) un module de réticulation comprenant un agent de réticulation de type polyisocyanate, où le ou les plusieurs composé(s) à fonction thiol est/sont présent(s) en une quantité permettant de fournir un rapport molaire de groupes thiol sur les atomes de métal du catalyseur de durcissement à base de métal supérieur ou égal à 10, et où la base est présente en une quantité molaire inférieure à la quantité molaire de groupes thiol, et où le rapport molaire entre les groupes acides et les groupes basiques est supérieur ou égal à 1 : 1.

**6.** Kit d'éléments pour préparer une composition de revêtement selon l'une quelconque des revendications 1 à 3 précédentes, comprenant

i) un module liant comprenant un polyol et une base ayant une valeur pKa d'au moins 7, et laquelle base ne réagit pas avec les groupes isocyanate de manière à ce que la basicité soit réduite,
ii) un module de réticulation comprenant un agent de réticulation de type polyisocyanate, et
iii) un module diluant comprenant un diluant organique volatil, un catalyseur de durcissement à base de métal pour catalyser la réaction d'addition de groupes isocyanate et de groupes hydroxyle, et un ou plusieurs composé(s) à fonction thiol, où le ou les plusieurs composé(s) à fonction thiol est/sont présent(s) en une quantité permettant de fournir un rapport molaire de groupes thiol sur les atomes de métal du catalyseur de durcissement à base de métal supérieur ou égal à 10, et où la base est présente en une quantité molaire inférieure à la quantité molaire de groupes thiol, et où au moins l'un des modules comprend un composé contenant des groupes acides, et où le rapport molaire entre les groupes acides et les groupes basiques est supérieur ou égal à 1 : 1.

**7.** Méthode pour fournir un revêtement à au moins une partie de la surface extérieure d'un véhicule de transport, où la méthode comprend les étapes qui consistent à appliquer une composition de revêtement liquide selon l'une quelconque des revendications 1 à 3 précédentes à au moins une partie de la surface extérieure d'un véhicule de transport, et à durcir la composition de revêtement appliquée dans une plage de température allant de 5 à 80°C.

**8.** Méthode selon la revendication 7, dans laquelle la composition de revêtement liquide est appliquée en tant que couche transparente au-dessus d'une couche de base pigmentée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010112441 A
- WO 2010046333 A
- US 4788083 A
- WO 2010113441 A
- WO 98053013 A
- WO 9620968 A
- EP 0688840 A
- WO 96040813 A
- WO 9317060 A
- WO 9731073 A
- WO 2004031256 A
- WO 2005035613 A
- EP 0448224 A
- US 5214086 A
- WO 2007020269 A